# EUROPEAN PATENT APPLICATION

(11) **EP 1 137 301 A1**
(43) Date of publication of application: **26.09.2001**
(21) Application number: 00850053.0
(22) Date of filing: 23.03.2000
(51) Int. Cl.: H04Q 7/38

(54) **Method for location of mobile stations in a mobile network**

(71) Applicant: TELEFONAKTIEBOLAGET L M ERICSSON (publ), 126 25 Stockholm (SE)
(72) Inventor: Cedervall, Mats, 187 44 Täby (SE); Kangas, Ari, 11421 Stockholm (SE); Jober, Johan, 162-0826 Shinjuku-ku (JP)
(74) Representative: Larfeldt, Helene

(57) **Abstract**

The invention is concerned with a method for location of mobile stations within a mobile network including at least two mobile stations and at least three base stations, by means of signal measurements performed at the mobile stations and/or the base stations. In the method of the invention two or more mobile stations are loctaed simultaneously by minimizing a cost-function, which is achieved by means of a sufficient number of equations, whereby in each equation the location of a mobile station is a function of the location of a base station in the network and performed signal measurements.

## Description

The invention is concerned with a method for location of mobile stations within a mobile network including mobile stations and base stations.

### TECHNICAL BACKGROUND

Location based services for mobile stations are expected to play an important role in future applications of wireless systems. Examples of such services are emergency services, road assistance, location based yellow pages, traffic information etc.

A wide variety of technologies for location of the mobile stations have been developed. Many of these have been targeted towards the United States Federal Communication Commission (US FCC) requirement to position emergency 911 callers with high accuracy. These technologies can be classified into external methods or cellular system based methods. An example of an external method is the Global Positioning System (GPS). The cellular system based methods can be further categorized depending on whether it is the network or the mobile station that makes the necessary signal measurements. The signal measurements themselves may consist of the time of arrival of signals from a base station to a mobile station, angle of arrival or round trip delay measurements of signals from a serving base station to a mobile station, or combinations thereof.

Most methods require hardware in the mobile station or in the network. In addition, Location Measurement Units (LMUs) are required in some methods to obtain knowledge about the relative time differences for sending signals to different mobile stations. This means that the operator is faced with an upfront cost for investing in new equipment. This applies for both network and MS based methods.

For many location based services it is expected that accuracies of 500 m or even higher is sufficient. For these types of services, investments in new expansive equipment cannot be easily justified. A phased solution is probably the most attractive choice. The operator may initially offer services based on low accuracy and then invest in new infrastructure as the revenues grow.

For these reasons it is of interest to investigate what can be done with minimal network impact. The currently available network information (relevant for location) includes the serving cell identity, timing advance and the MS measurement reports. The timing advance is an estimate of the transmission time (i.e. the signal from the mobile station to the base station) by means of which the distance from the serving base station to the mobile station can be estimated. The measurement reports contain the MS estimates of the signal strengths and identities of the neighboring base stations.

Time of Arrival (TOA) measurements measure the transmission time between a mobile station and a base station. Time Difference of Arrival (TDOA) measurements measure the difference of the transmission time between the mobile station and two different base stations. The measurements received from the base stations are then used to calculate the actual position of the mobile station. This procedure using well-known geometric equations is called triangulation.

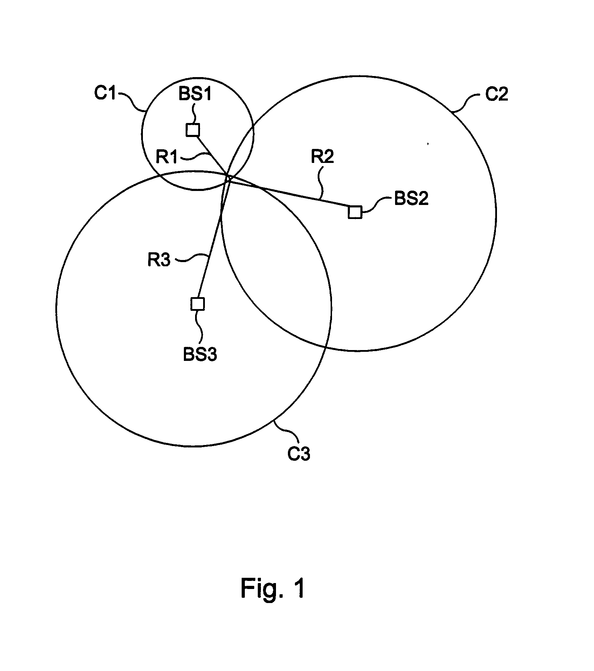

In a TOA measuring procedure shown in figure 1, a mobile station MS is connected to at least three base stations BS1 - BS3. In order to determine the position of the mobile station MS, the distance of the mobile station from each of the three base stations is measured using the Time of Arrival (TOA) technique. The measured distance R1 from base station BS1 defines a circle C1 around the base station BS1, and the mobile station MS is located somewhere along the circle C1. Likewise, distances R2 and R3 are measured from base stations BS2 and BS3, respectively, thereby defining the circles C2 and C3. The intersection of circles C1, C2 and C3 define the location of the mobile station MS. This technique is presented in the international patent application WO 99/21389.

In the Time Difference of Arrival (TDOA) measuring technique, the position determinations use TDOA calculations which are further based on Time of Arrival (TOA) measurements. In this method, the position of the mobile station is located at or near the point where a plurality of hyperbolic arcs cross over one another. Such a method is presented in the international patent application WO 99/29130.

The two most common location methods are the Down-link Observed Time Difference of Arrival method (DL-OTDOA) and the Up-link Time of Arrival method (UL-TOA). The DL-OTDOA method is based on measurements performed by the mobile station (MS).

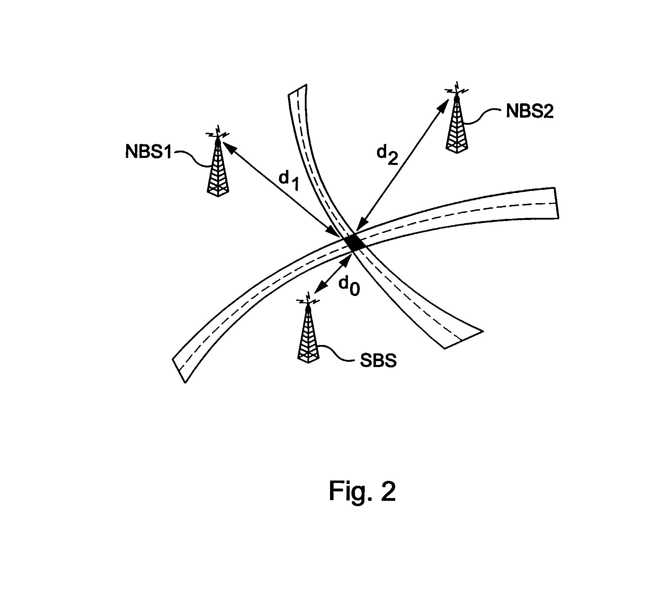

Figure 2 illustrates how DL-OTDOA works. OTDOAs of the signals received from two base stations form a hyperbola. In the figure, there is one serving base station SBS and two neighbour base stations NBS1 and NBS2. The areas outside the dotted line in the hyperbolas indicates a measurement error margin. When three or more base stations (BSs) are available, the MS will be located in the intersection of these hyperbolas. In order to compensate for the possibly non-time aligned transmissions from the different BSs, the real time differences (RTDs) have to be known if the base stations are not synchronized e.g. to a global time reference. These can be obtained e.g. by having LMUs in at least some of the base stations (BSs).

UL-TOA works in a similar manner except that it is the BSs that make measurements on a signal transmitted by the MS.

The accuracy of the method depends on e.g. the accuracy of the measurements but also on the relative position of the mobile station and the base stations involved. The accuracy can be very poor for some configurations. This phenomena is called Geometrical Dilution of Precision (GDOP). Mathematically, GDOP is defined as the accuracy of the position fix divided by the accuracy of the measurements.

The object of the invention is to develop a simpler method for location of mobile stations in connection with unsynchronized base stations wherein no LMUs are needed.

### SUMMARY OF THE INVENTION

The method of the invention for location of mobile stations is mainly characterized in that two or more mobile stations are located simultaneously by minimizing a cost-function, which is achieved by means of a sufficient number of equations, whereby in each equation the location of a mobile station is a function of the location of a base station in the network and performed signal measurements.

The signal measurements can be performed by the mobile stations and consist of reciving times of signals from base stations in the system to mobile stations in the system and possibly Round Trip Time (RTT) measurements. The Round Trip Time is the transmission time of a signal from a mobile station to the base station and back. Whether the measurement of the RTT to the serving base station or some other base station or base stations is performed is decided from case to case and the decision might depend on e.g. available equipment, the complexity of the system etc.

The location of the mobile station is described by co-ordinates of given dimensions, in practice by two or three co-ordinates.

The number of equations needed depends on the dimension of the co-ordinates, the knowledge of Round Trip Times (RTTs).
The numbert of mobile stations needed to be simultaneously positioned and the number of base stations depend on the knowledge of Round Trip Times (RTTs) and the dimension of the co-ordinates used for location of the mobile stations.

By positioning two or more MSs simultaneously, it is possible to avoid the requirement to have LMUs when the base stations are unsynchronized. In this context, simultaneously means that the measurements have to be made close enough in time so that the BS clocks have not drifted significantly. In practice, this could mean for instance that the measurements have to be made within about one minute.

In the following, examples of some preferable embodiments of the invention are described by means of figures. The invention is not in any way restricted to the details of these figures, which are presented for illustrative purposes only.

### FIGURES

Figure 1 presents an example of a prior art positioning method.

Figure 2 presents an example of another prior art positioning method

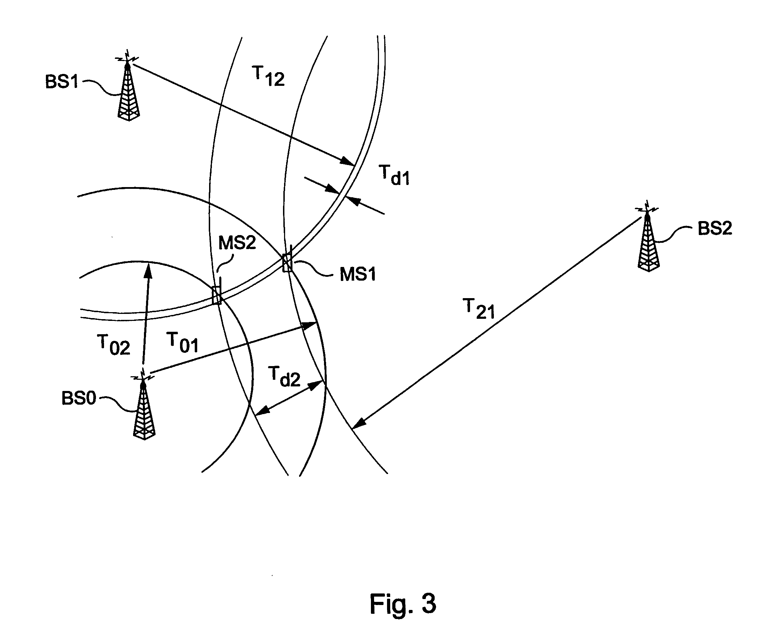

Figure 3 presents an example of an embodiment of the invention.

Figure 4 presents simulation results of the method of the invention compared with prior art results.

### DETAILED DESCRIPTION

In the general case, with three or more base stations and two or more mobile stations, the minimization of a cost-function gives the locations of the mobile stations. The cost-function cost-function is achieved by means of a sufficient number of equations, whereby in each equation the location of a mobile station is a function of the location of a base station in the network and performed signal measurements.

In the general case, the equations for the distances (measured in some arbitrary unit such as meters or seconds) between the base stations and the mobile stations are given by the following equations$\text{∥} {\text{M}}_{\text{1}} \text{-} {\text{B}}_{\text{0}} \text{∥ =} {\text{T}}_{\text{01}} \text{-} {\text{T}}_{\text{0}} \text{∥} {\text{M}}_{\text{1}} \text{-} {\text{B}}_{\text{1}} \text{∥ =} {\text{T}}_{\text{11}} \text{-} {\text{T}}_{\text{1}} \text{•} \text{•} \text{•} \text{∥} {\text{M}}_{\text{1}} \text{-} {\text{B}}_{\text{nb}} \text{∥ =} {\text{T}}_{\text{nb}} {\text{}}_{\text{1}} \text{-} {\text{T}}_{\text{nb}} \text{•} \text{•} \text{•} {\text{∥M}}_{\text{nm}} {\text{- B}}_{\text{nb}} {\text{∥ = T}}_{\text{nbnm}} {\text{- T}}_{\text{nb}} \text{+} {\text{τ}}_{\text{nm}}$ where
Tᵢ ( = T₀, T₁ ... T_{nb} ) denotes the transmission time from base station BSᵢ ( = BS1, BS2... BS_{nb}) to mobile station MS1,
τⱼ₊₁ ( = τ₂, τ₃ ... τₙₘ) is the difference in time-base between MS1 and MSⱼ₊₁ ( = MS2, MS3 ...MSₙₘ),
Tᵢ + τⱼ denotes the transmission time from base station BSᵢ to mobile station MSⱼ.
Tᵢⱼ ( = T₀₁ T₀₂ ..T₀ₙₘ .. T_{nbnm}) is the receiving time of the signal from base station BSᵢ to mobile station MSⱼ ( = MS1, MS2..MSₙₘ),
Mⱼ is the co-ordinates of MSⱼ,
Bᵢ is the co-ordinates of BSᵢ,
nm denotes the number of MSs,
nb denotes the number of base stations minus one.

Since the measurements are performed in the time-base of the mobile stations, the relations of the MS time-bases, given by τⱼ are additional unknown terms, if the mobile stations do not have a common time reference. If The Round Trip Times (RTT) are available, these are known.

A mobile station can either be located by two or three coordinates, the optional coordinate representing the height position not being necessary in all situations. Three coordinates are most important for example on mountains etc.

The number of equations should be larger or equal to the number of unknowns.

If for example the RTT to one base station is known for all MSs, then the number of unknowns is nb + C * nm -1,
wherein C denote the dimension of the co-ordinates (2 or 3).

When there is no RTT known, the number of unknowns is nb + (C+1)*nm - 1

The number of equations is nm *nb

The following tables show the number of equations minus the number of unknowns for different combinations of numbers of MSs and BSs. Tables are included for the cases with two- and three-dimensional co-ordinates and with and without knowledge about RTTs.

The MS positions can not be obtained by directly solving the above equations. In practice, there will be measurement errors so that the equations cannot be satisfied simltaneously. Instead, the positions can be found with a minimization approach, e.g. with the least square method.

**TABLE 1.**

| **The number of equations minus the number of unknowns when two-dimensional co-ordinates are used and the RTT to one base station from all the mobile stations is known** | | | | | | |
|---|---|---|---|---|---|---|
| **n.MS/nBS** | **1** | **2** | **3** | **4** | **5** | **6** |
| **1** | -1 | -1 | -1 | -1 | -1 | -1 |
| **2** | -2 | -1 | 0 | 1 | 2 | 3 |
| **3** | -3 | -1 | 1 | 3 | 5 | 7 |

**TABLE 2.**

| **The number of equations minus the number of unknowns when two-dimensional co-ordinates are used and the RTT is unknown** | | | | | | |
|---|---|---|---|---|---|---|
| **n.MS/nBS** | **1** | **2** | **3** | **4** | **5** | **6** |
| **1** | -2 | -2 | -2 | -2 | -2 | -2 |
| **2** | -4 | -3 | -2 | -1 | 0 | 1 |
| **3** | -6 | -4 | -2 | 0 | 2 | 4 |
| **4** | -8 | -5 | -2 | 1 | 4 | 7 |

**TABLE 3.**

| **The number of equations minus the number of unknowns when two-dimensional co-ordinates are used and the RTT to one base station from all the mobile stations is known** | | | | | | |
|---|---|---|---|---|---|---|
| **n.MS/nBS** | **1** | **2** | **3** | **4** | **5** | **6** |
| **1** | -2 | -2 | -2 | -2 | -2 | -2 |
| **2** | -4 | -3 | -2 | -1 | 0 | 1 |
| **3** | -6 | -4 | -2 | 0 | 2 | 4 |

**TABLE 4.**

| **The number of equations minus the number of unknowns when three-dimensional co-ordinates are used and the RTT is unknown** | | | | | | | |
|---|---|---|---|---|---|---|---|
| **n.MS/nBS** | **1** | **2** | **3** | **4** | **5** | **6** | **7** |
| **1** | -3 | -3 | -3 | -3 | -3 | -3 | -3 |
| **2** | -6 | -5 | -4 | -3 | -2 | -1 | 0 |
| **3** | -9 | -7 | -5 | -3 | -1 | 1 | 3 |

From the tables it can be concluded that the computations are significantly simpler in the two-dimensional case.

The necessary requirement with respect to the number of equations vs unknowns is not the only condition for a sucessful location. There exist degenerate cases when the geometry makes it impossible to position the MSs. Trivial examples of degenerate cases, e.g. when the MSs are very close to eachother will lead to poor GDOP (Geometric Dilution of Precision).

In the embodiemtn of figure 2, the invention is implemented in the simplest possible case, in which there are two mobile stations MS1 resp. MS2 and three base stations BS1, BS2 and BS0. BS0 is the current serving base station for both of the mobile stations MS1 and MS2.

Both mobile stations MS1 and MS2 measure and report receiving times of signals (or Times of Arrival, TOA) from the base stations BS1, BS2 and BS0. In the general case, Tᵢⱼ was the receiving time of the signal from base station BSᵢ to mobile station MSⱼ.

In the example of figure 2, it means that T₁₂ measured by MS2 is the receiving time for the signal from base station BS1 to mobile station MS2, T₂₁ measured by MS1 is the receiving time for the signal from base station BS2 to mobile station MS1, T₂₂ (not illustrated) measured by MS2 is the receiving time for the signal from base station BS2 to mobile station MS2, T₁₁ (not illustrated) measured by MS1 is the receiving time for the signal from base station BS1 to mobile station MS1, T₀₂ measured by MS2 is the receiving time for the signal from the serving base station BS0 to mobile station MS2, and T₀₁ measured by MS1 is the receiving time for the signal from the serving base station BS0 to mobile station MS1.

Therefore, the mobile station MS2 from the serving base station BS0 to mobile station MS2 is located somewhere on the circle defined by the location of the serving base station BS0 and T₀₂. Correspondingly, mobile station MS1 is located somewhere on the circle defined by the location of the serving base station BS0 and T₀₁.

In the embodiement of figure 2, it is assumed that the Round Trip Times (RTTs) to the serving base station BS0, i.e. the transmission time for the signals from the mobile stations MS1, MS2 to the serving base station BS0 and back to the mobile stations MS1, MS2, are known. In the general case, Tᵢ denotes the transmission time from base station BSᵢ.

The value of the transmission time T₀ from the serving base station BS0 to mobile station MS2 is achieved as half of the round trip time (RTT) for mobile station MS2 (the signal from the serving base station BS0 to mobile station MS2 and back).

The value of the transmission time T₀ + τ₂ from the serving base station BS0 to mobile station MS2 is achieved as half of the round trip time (RTT) for mobile station MS1.

By using the two transmission times times and the receiving times T₀₁,T₀₂, the difference in propagation delay T_{d1} for the signals from BS1 to the mobile stations MS1 and MS2, can be calculated. Correspondingly, by using the two receiving times T₀₁ ,T₀₂ and the transmission times T₀ and T₀ + τ₂, the difference in propagation delay T_{d2} for the signals from BS2 to the mobile stations MS1 and MS2, can be calculated.

The equations for the general case referred to above are used for the calculations. This means that the equations for the embodiment of figure 2 are six.$\text{∥} {\text{M}}_{\text{1}} \text{-} {\text{B}}_{\text{0}} \text{∥ =} {\text{T}}_{\text{01}} \text{-} {\text{T}}_{\text{0}}$$\text{∥} {\text{M}}_{\text{1}} \text{-} {\text{B}}_{\text{1}} \text{∥ =} {\text{T}}_{\text{11}} \text{-} {\text{T}}_{\text{1}}$$\text{∥} {\text{M}}_{\text{1}} \text{-} {\text{B}}_{\text{2}} \text{∥ =} {\text{T}}_{\text{21}} \text{-} {\text{T}}_{\text{2}}$$\text{∥} {\text{M}}_{\text{2}} \text{-} {\text{B}}_{\text{0}} \text{∥ =} {\text{T}}_{\text{02}} \text{-} {\text{T}}_{\text{0}} {\text{+ τ}}_{\text{2}}$$\text{∥} {\text{M}}_{\text{2}} \text{-} {\text{B}}_{\text{1}} \text{∥ =} {\text{T}}_{\text{12}} \text{-} {\text{T}}_{\text{1}} {\text{+ τ}}_{\text{2}}$$\text{∥} {\text{M}}_{\text{2}} \text{-} {\text{B}}_{\text{2}} \text{∥ =} {\text{T}}_{\text{22}} \text{-} {\text{T}}_{\text{2}} {\text{+ τ}}_{\text{2}}$

As the T_{d1} was defined as the difference in propagation delay T_{d1} for the signals from BS1 to the mobile stations MS1 and MS2 i.e. ∥*M*₁ - *B*₁∥ - ∥*M*₂ - *B*₁∥, T_{d1} can be calculated as T_{d1}= equation (2) - equation (5). Analogously, T_{d2} was defined as the difference in propagation delay T_{d2} for the signals from BS2 to the mobile stations MS1 and MS2 i.e ∥*M*₁ - *B*₂∥ - ∥*M*₂ - *B*₂∥, T_{d1} can be calculated as T_{d2} = equation (3) - equation (6).

T₀₁ ,T₁₁ ,T₂₁ ,T₀₂, T₁₂ and T₂₂ are measured and thus known as explained above and as it was assumed that the RTTs are known, then T₀ and τ₂ are known, too (as RTT/2). Unknown terms are then M₁, M₂ , T₁, and T₂.

MS1 is located somewhere on the circle defined by the location of the serving base station BS1 and T₁₂ +T_{d1}. Similarly, MS2 is located somewhere on the circle defined by the location of the serving base station BS2 and T₂₁ +T_{d2}.

Since the time of transmission from BS1 to MS2 is unknown, T₁ is unknown. Similarly, T₂ is unknown since the time of transmission from BS2 to MS1 is unknown.

Thus, MS1 is located in a position defined by the following three circles:
the circle defined by the location of the serving base station BS0 and T₀₁,
the circle defined by the location of base station BS1 and T₁₂ +T_{d1} and
the circle defined by the location of base station BS2 and T₂₁, and
   MS1 is located in a position defined by the following three circles:
   the circle defined by the location of the serving base station BS0 and T₀₂,
   the circle defined by the location of base station BS2 and T₂₁ +T_{d2} and
   the circle defined by the location of base station BS1 and T₁₂.

T₁ and T₂ are still unknown. In the non-degenerate case (when the mobile stations are not at the same place), T₁ and T₂ can be found graphically by adjusting them until the three circles corresponding to MS1 intersect at one point and at the same time the three circles corresponding to MS2 T_{d1} intersects at another point. The two points give the locations of the mobile stations MS1 and MS2.

Mathematically, the locations of the mobile stations MS1 and MS2 can be estimated by minimizing the cost-function${\text{T}}_{\text{d1}} {\text{= (2) - (5) and T}}_{\text{d2}} \text{= (3) - (6)}$ so that${\text{T}}_{\text{d1}} \text{= ∥} {\text{M}}_{\text{1}} \text{-} {\text{B}}_{\text{1}} \text{∥ - ∥} {\text{M}}_{\text{2}} \text{-} {\text{B}}_{\text{1}} \text{∥ -} {\text{T}}_{\text{11}} \text{-} {\text{T}}_{\text{1}} \text{-} {\text{T}}_{\text{12}} \text{+} {\text{T}}_{\text{1}} {\text{- τ}}_{\text{2}}$${\text{T}}_{\text{d2}} \text{= ∥} {\text{M}}_{\text{1}} \text{-} {\text{B}}_{\text{2}} \text{∥ - ∥} {\text{M}}_{\text{2}} \text{-} {\text{B}}_{\text{2}} \text{∥=} {\text{T}}_{\text{21}} \text{-} {\text{T}}_{\text{2}} \text{-} {\text{T}}_{\text{2}} \text{-} {\text{T}}_{\text{22}} \text{+} {\text{T}}_{\text{2}} {\text{- τ}}_{\text{2}}$

Least square minimization gives 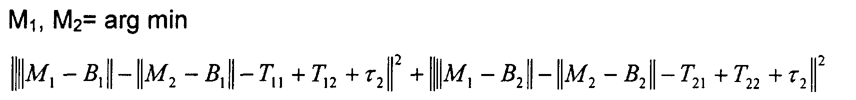 with the conditions given by equations (1) and (4)

### EXAMPLE

In order to evaluate the likelihood of bad GDOP, the invented method has been evaluated with numerical simulations and compared to a prior art method.

It should be noted that after the positions are calculated, the relative time differences RTDs of the involved BSs are known. This means that, if it is desired to position another MS, it is sufficient to make measurements in only one MS, under the condition that the BSs clocks have not drifted too much.

In the example, three BSs are placed in a uniform pattern and 1000 MSs are randomly placed in the surrounding area. The true TOAs are calculated and an error corresponding to 100 m is added to all TOA measurements (including measurements performed by LMUs and BSs). The positions are then estimated with the least square method for both the invented method and the OTDOA method with LMUs.

The invented method is evaluated in the case when RTT measurements are performed and when two-dimensional co-ordinates are considered. As a reference, the standard OTDOA method is evaluated for the same MSs.

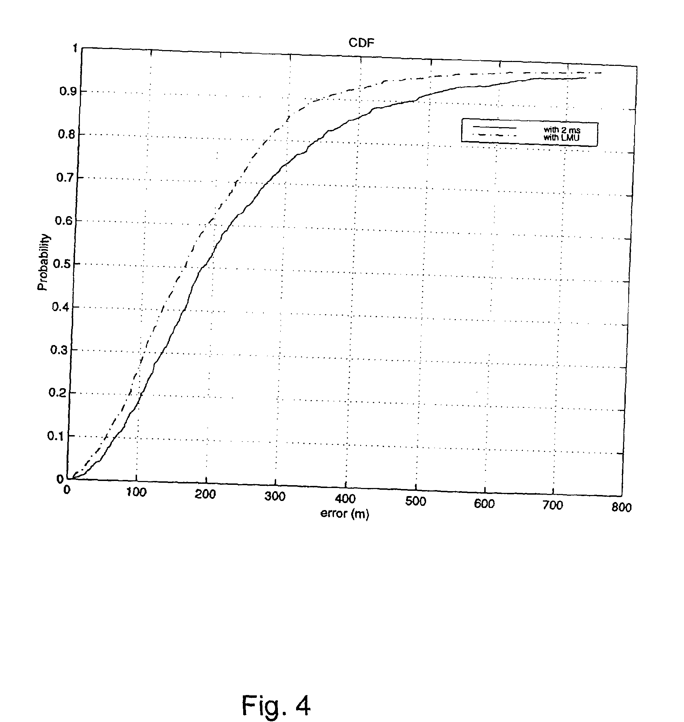

The results are shown in figure 4, which presents the cumulative distribution functions or the errors for the invented method and the standard OTDOA method by using LMUs. As could have been expected, the invented method has slightly worse performance than the OTDOA method, but on the other hand it is much less expensive to implement. The reason for that the performance is worse is the GDOP properties.

## Claims

1. Method for location of mobile stations within a mobile network including at least two mobile stations and at least three base stations, by means of signal measurements performed at the mobile stations and/or the base stations,
**characterized by** locating two or more mobile stations simultaneously by minimizing a cost-function, which is achieved by means of a sufficient number of equations, whereby in each equation the location of a mobile station is a function of the location of a base station in the network and performed signal measurements.

2. Method of claim 1, **characterized in that** the the signal measurements performed consist of the receiving time of signals from base stations in the system to mobile stations in the system.

3. Method of claim 1 or 2, **characterized in that** the signal measurements performed consist of the round trip time of signals from base stations in the system to mobile stations in the system.

4. Method of any of claims 1 - 3, **characterized in that** the location of the mobile station is described by co-ordinates of given dimensions.

5. Method of claim 4, **characterized in that** the location of the mobile station is described by two co-ordinates.

6. Method of claim 4, **characterized in that** the location of the mobile station is described by three co-ordinates.

7. Method of claim 4, **characterized in that** the number of equations needed depends on the dimension of the co-ordinates.

8. Method of claim 3, **characterized in that** the number of equations needed depends on the knowledge of Round Trip Times (RTTs).

9. Method of any of claim 1 - 9, **characterized in that** the numbert of mobile stations needed to be simultaneously positioned and the number of base stations depend on the knowledge of Round Trip Times (RTTs) and the dimension of the co-ordinates used for location of the mobile stations.

10. Method of any of claims 1 - 10, **characterized in that** the measurements are made close enough in time so that the BS clocks have not drifted significantly.

11. Method of claim 11, **characterized in that** the measurements are made within one minute.
